# EUROPÄISCHE PATENTSCHRIFT

(11) **EP 2 245 276 B1**
(45) Veröffentlichungstag und Bekanntmachung des Hinweises auf die Patenterteilung: **26.02.2014**
(21) Anmeldenummer: 08871050.4
(22) Anmeldetag: 04.12.2008
(51) Int. Cl.: F01L 1/34

(54) **HYDRAULISCHES STEUERVENTIL MIT INTEGRIERTEM RÜCKSCHLAGVENTIL**
HYDRAULIC CONTROL VALVE HAVING INTEGRATED CHECK VALVE
SOUPAPE DE COMMANDE HYDRAULIQUE À CLAPET ANTIRETOUR INTÉGRÉ

(30) Priorität: 16.01.2008 DE 102008004591
(43) Veröffentlichungstag der Anmeldung: 03.11.2010
(73) Patentinhaber: Schaeffler Technologies AG & Co. KG, 91074 Herzogenaurach (DE)
(72) Erfinder: HOPPE, Jens, 91056 Erlangen (DE); BAYRAKDAR, Ali, 90552 Röthenbach/Pegnitz (DE)
(86) Internationale Anmeldenummer: PCT/EP2008/066803
(87) Internationale Veröffentlichungsnummer: WO 2009/089960

(56) Entgegenhaltungen:
- EP-A- 1 291 563
- WO-A-03/067034
- WO-A-2005/108835
- WO-A-2005/119026
- DE-A1- 4 445 650
- DE-A1-102005 060 111
- US-A1- 2004 226 526

## Beschreibung

### Gebiet der Erfindung

Die Erfindung liegt auf dem technischen Gebiet der Druckmittelsteuerung und betrifft nach ihrer Gattung ein Steuerventil mit einem integrierten Rückschlagventil zur Steuerung von Druckmittelströmen insbesondere für einen Nockenwellenversteller.

### Stand der Technik

In Brennkraftmaschinen werden Gaswechselventile durch Nocken wenigstens einer durch eine Kurbelwelle in Drehung versetzten Nockenwelle betätigt. Vor dem Hintergrund thermodynamischer Prozesse hat es sich als vorteilhaft erwiesen, wenn während des Betriebs der Brennkraftmaschine auf die Steuerzeiten der Gaswechselventile Einfluss genommen wird, was durch eine Änderung der relativen Drehlage zwischen Kurbel- und Nockenwelle erfolgen kann. In modernen Brennkraftmaschinen werden für diesen Zweck an den Ölkreislauf der Brennkraftmaschine angeschlossene Vorrichtungen zur Änderung und Fixierung der relativen Drehlage zwischen Nocken- und Kurbelwelle eingesetzt, welche meist k18urz als "Nockenwellenversteller" bezeichnet werden.
Nockenwellenversteller umfassen in der Regel ein über ein Antriebsrad mit der Kurbelwelle drehfest verbundenes Antriebsteil und ein nockenwellenfestes Abtriebsteil, sowie einen zwischen An- und Abtriebsteil geschalteten hydraulischen Stelltrieb, welcher das Drehmoment von dem Antriebsteil auf das Abtriebsteil überträgt und eine Verstellung sowie Fixierung der relativen Drehlage zwischen An- und Abtriebsteil bewirkt.

In einer gängigen Bauart sind Nockenwellenversteller als so genannte Rotationskolbenversteller gestaltet, bei denen das Antriebsteil als Außenrotor ("Stator") und das Abtriebsteil als ein zum Außenrotor konzentrisch angeordneter Innenrotor ("Rotor") ausgebildet sind. Im radialen Zwischenraum zwischen Stator und Rotor sind Druckräume geformt, die durch beispielsweise mit dem Rotor verbundene Trennelemente ("Flügel") jeweils in zwei Druckkammern geteilt werden. Durch gezielte Druckbeaufschlagung der Druckkammern kann der Rotor gegen den Stator hydraulisch verschwenkt werden, wodurch eine Drehung der Nockenwelle und demzufolge eine Änderung der relativen Drehlage zwischen Nockenwelle und Kurbelwelle erfolgt. Gleichermaßen ist eine hydraulische Verspannung von Stator und Rotor möglich.

Eine Steuerung des Nockenwellenverstellers erfolgt durch eine elektronische Steuereinheit, welche auf Basis von erfassten Kenndaten der Brennkraftmaschine den Zu- und Abfluss von Druckmittel zu bzw. von den einzelnen Druckkammern steuert. Die Druckmittelströme werden hierbei durch ein von der Steuereinheit über elektrische Signale gesteuertes hydraulisches Steuerventil geregelt.

Hydraulische Steuerventile in Form von Mehrwege-Schieberventilen zur Steuerung von Druckmittelströmen für Nockenwellenversteller sind als solche hinlänglich bekannt. Sie umfassen als wesentliche Komponenten ein Ventilgehäuse und einen in einem Gehäusehohlraum axial verschiebbar aufgenommenen Steuerkolben, der von einem Aktuator, typischer Weise ein Elektromagnet mit Stößel, betätigt wird.

In einer gängigen Bauart sind Steuerventile als so genannte Zentralventile gestaltet, welche in eine Zentralbohrung des nockenwellenfesten Abtriebsteils des Nockenwellenverstellers eingesetzt werden. Das Ventilgehäuse eines solchen Zentralventils ist mit einem Gewinde versehen, über welches das Ventilgehäuse in eine entsprechende Gewindebohrung der Nockenwelle eingeschraubt werden kann, um das Abtriebsteil drehfest mit der Nockenwelle zu verbinden. Eine Zufuhr bzw. Abfuhr von Druckmittel zum Druckmittelanschluss bzw. vom Ablaufanschluss des Steuerventils erfolgt durch das Abtriebsteil bzw. die Nockenwelle.

Nun können während des Betriebs der Brennkraftmaschine an der Nockenwelle Wechselmomente auftreten, die über die Druckkammern als Druckstöße auf das Hydrauliksystem des Nockenwellenverstellers übertragen werden. Um eine Weiterleitung derartiger Druckstöße zu verhindern, werden im Druckmittelzulauf des Nockenwellenverstellers hydraulisch entsperrbare Rückschlagventile eingesetzt. Solche Rückschlagventile sind beispielsweise in der deutschen Offenlegungsschrift DE 102004038252 A1 und in der deutschen Offenlegungsschrift DE 102004035035 A1 beschrieben. Weitere Beispiele für Rückschlagventile sind in den Offenlegungsschriften DE102005060111 A1, US2004/0226526 A1 und DE4445650 A1 enthalten.

Ein gattungsgemäßes Steuerventil mit einem integrierten Rückschlagventil ist beispielsweise in der deutschen Offenlegungsschrift DE 102005052481 A1 der Anmelderin beschrieben. Bei diesem Steuerventil, welches in Form eines Zentralventils ausgebildet ist, ist stromabwärts eines Druckmittelanschlusses (Druckmittelzulauf) ein hydraulisch entsperrbares Rückschlagventil angeordnet, das mit einem als Kugel geformten Schließelement versehen ist. Die Kugel wird von einem Federelement auf einen Dichtsitz gedrückt und kann durch das Druckmittel entgegen der Federkraft von ihrem Dichtsitz abgehoben werden.

Wie sich in der Praxis gezeigt hat, sperrt ein solches Rückschlagventil aufgrund der relativ großen Massenträgheit der Kugel erst mit einer unerwünscht langen zeitlichen Verzögerung den Rückfluss von Druckmittel, was sich in nachteiliger Weise auf die Verstellgeschwindigkeit des Nockenwellenverstellers auswirkt.

### Zusammenfassung der Erfindung

### Aufgabe der Erfindung

Demgegenüber besteht die Aufgabe der vorliegenden Erfindung darin, ein Steuerventil mit integriertem Rückschlagventil zur Regelung von Druckmittelströmen zur Verfügung zu stellen, durch welches eine schnellere Verstellgeschwindigkeit des Nockenwellenverstellers ermöglicht wird.

### Lösung der Aufgabe

Diese und weitere Aufgaben werden nach dem Vorschlag der Erfindung durch ein Steuerventil mit einem integrierten Rückschlagventil zur Steuerung von Druckmittelströmen, insbesondere für einen hydraulischen Nockenwellenversteller einer Brennkraftmaschine, mit den Merkmalen des unabhängigen Anspruchs gelöst. Vorteilhafte Ausgestaltungen der Erfindung sind durch die Merkmale der Unteransprüche angegeben.

Erfindungsgemäß ist ein hydraulisches Steuerventil mit einem integrierten Rückschlagventil zur Steuerung von Druckmittelströmen gezeigt, welches insbesondere zur Steuerung von Druckmittelströmen eines hydraulischen Nockenwellenverstellers dient.

Das erfindungsgemäße Steuerventil zur Steuerung von Druckmittelströmen umfasst ein hohl ausgeführtes Ventilgehäuse mit wenigstens einem Zulaufanschluss, wenigstens zwei Arbeitsanschlüssen und wenigstens einem Ablaufanschluss. Es umfasst weiterhin einen innerhalb des Ventilgehäuses axial verschiebbar geführten Steuerkolben, durch welchen positionsabhängig, d. h. je nach axialer Lage des Steuerkolbens, der Zulaufanschluss über wenigstens eine erste Druckmittelleitung mit dem einen oder anderen Arbeitsanschluss verbindbar ist, während der jeweils andere Arbeitsanschluss über wenigstens eine zweite Druckmittelleitung mit dem Ablaufanschluss verbunden ist.

Es umfasst darüber hinaus wenigstens ein die erste Druckmittelleitung in Zulaufrichtung freigebendes, hydraulisch entsperrbares Rückschlagventil mit einem Schließelement, durch das eine Ventilöffnung verschließbar ist.

Das erfindungsgemäße Steuerventil zeichnet sich in wesentlicher Weise dadurch aus, dass das Schließelement mit wenigstens einer Durchbrechung versehen ist, derart, dass ein über wenigstens eine Federzunge federnd gelagertes Verschlussteil zum Verschließen der Ventilöffnung durch das Schließelement geformt ist. Das Schließelement ist zu diesem Zweck plättchenförmig gestaltet.

Bei einer vorteilhaften Ausgestaltung des erfindungsgemäßen Steuerventils ist das Schließelement aus dem Verschlussteil und einem das Verschlussteil wenigstens teilweise umgebenden Außenteil geformt, wobei das Außenteil zur Formung einer Mehrzahl Federzungen mit einer Mehrzahl das Verschlussteil (teil-)spiralförmig umgebenden Durchbrechungen versehen ist.

Bei einer weiteren vorteilhaften Ausgestaltung des erfindungsgemäßen Steuerventils ist das Schließelement aus dem Verschlussteil und einem das Verschlussteil wenigstens teilweise umgebenden Außenteil geformt, wobei das Außenteil zur Formung einer Mehrzahl Federzungen mit einer Mehrzahl das Verschlussteil konzentrisch umgebenden, (teil-)kreisringförmigen Durchbrechungen versehen ist.

Bei einer weiteren vorteilhaften Ausgestaltung des erfindungsgemäßen Steuerventils ist das Schließelement scheibenförmig ausgebildet.

Bei einer weiteren vorteilhaften Ausgestaltung des erfindungsgemäßen Steuerventils ist die wenigstens eine Durchbrechung spaltenförmig ausgebildet und weist eine minimale Spaltbreite von wenigstens 1 mm auf. In diesem Fall ist es bevorzugt, wenn die wenigstens eine Durchbrechung eine minimale Spaltbreite im Bereich von 1 bis 2 mm hat.

Bei einer weiteren vorteilhaften Ausgestaltung des erfindungsgemäßen Steuerventils besteht das Schließelement aus Federstahl. In diesem Fall ist es bevorzugt, wenn der Federstahl eine Stärke im Bereich 0,1 bis 0,5 mm hat.

Bei einer weiteren vorteilhaften Ausgestaltung des erfindungsgemäßen Steuerventils ist innerhalb des Ventilgehäuses ein hohl ausgeführter Druckmittelleiteinsatz mit einem Druckmittelkanal zur fluidleitenden Verbindung des Zulaufanschlusses mit einer Steuernut des Steuerkolbens angeordnet, in dessen Hohlraum der Steuerkolben axial verschiebbar aufgenommen ist. Hierbei ist der Druckmittelleiteinsatz mit einem Strukturabschnitt zur Fixierung des Schließelements an einer Sitzfläche versehen. Hierbei ist es vorteilhaft, wenn die Sitzfläche von einem in den Gehäusehohlraum eingesetzten Sitzflächeneinsatz geformt wird. Gleichermaßen kann es vorteilhaft sein, wenn der Sitzflächeneinsatz mit einem Halteelement zur relativen axialen Fixierung des Druckmittelleiteinsatzes versehen ist.

Bei einer besonders vorteilhaften Ausgestaltung formt der Druckmittelleiteinsatz einen Anschlag für das in Öffnungsstellung befindliche Schließelement, um eine Überdehnung von Federzungen zu vermeiden.

Die Erfindung erstreckt sich weiterhin auf einen hydraulischen Nockenwellenversteller mit einem wie oben beschriebenen Steuerventil.

### Kurze Beschreibung der Zeichnungen

Die Erfindung wird nun anhand von Ausführungsbeispielen näher erläutert, wobei Bezug auf die beigefügten Zeichnungen genommen wird. Gleiche bzw. gleich wirkende Elemente sind in den Zeichnungen mit gleichen Bezugszahlen bezeichnet. Es zeigen:
- Fig. 1: eine Axialschnittansicht eines Steuerventils gemäß einem Ausführungsbeispiel der Erfindung;

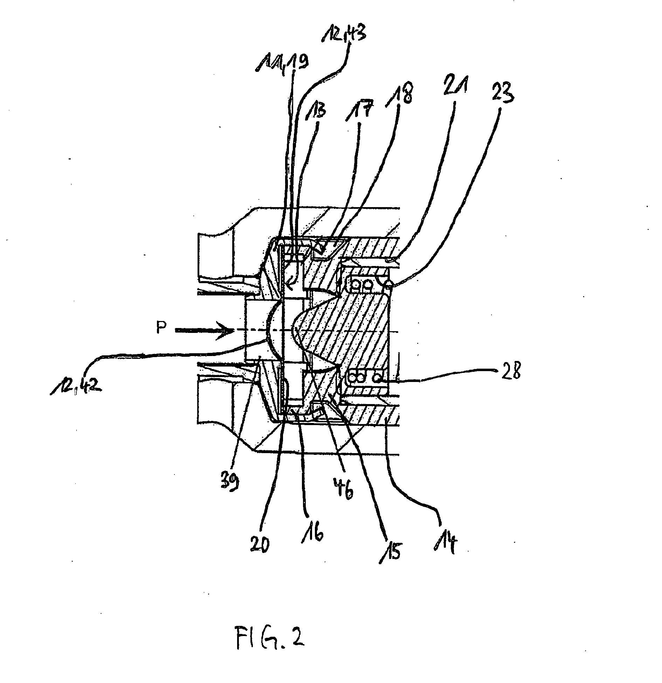

- Fig. 2: ein vergrößerter Ausschnitt des Steuerventils von Fig. 1 im Bereich des Rückschlagventils;
- Fig. 3: eine perspektivische Ansicht und eine Axialschnittansicht eines Ausführungsbeispiels der Dichtscheibe des Rückschlagventils des Steuerventils von Fig. 1;
- Fig. 4: eine perspektivische Ansicht und eines Axialschnittansicht eines weiteren Ausführungsbeispiels der Dichtscheibe des Rückschlagventils des Steuerventils von Fig. 1;
- Fig. 5: eine perspektivische Ansicht und eines Axialschnittansicht eines weiteren Ausführungsbeispiels der Dichtscheibe des Rückschlagventils des Steuerventils von Fig. 1.

### Ausführliche Beschreibung der Zeichnungen

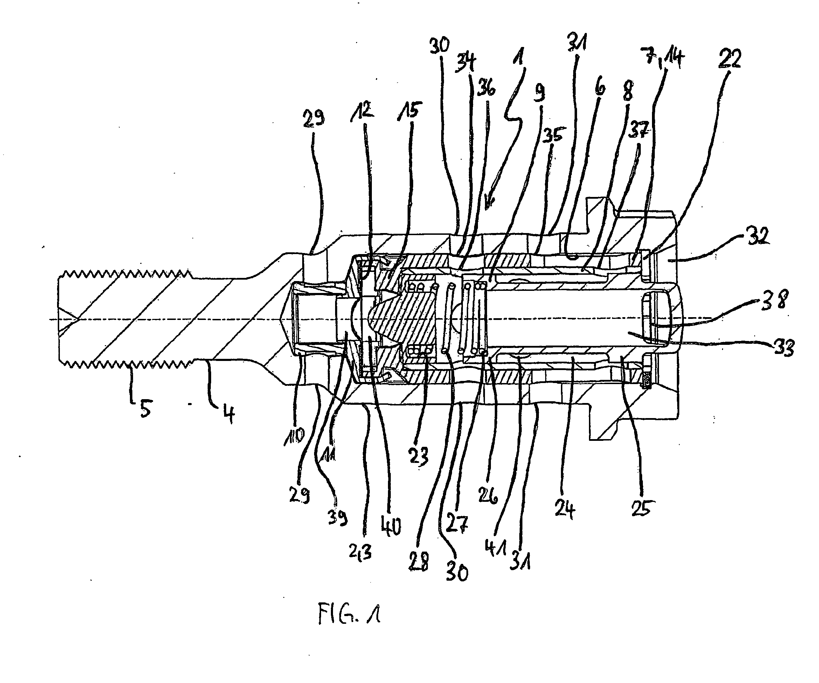

In Fig. 1 ist ein Ausführungsbeispiel des erfindungsgemäßen Steuerventils gezeigt. Das Steuerventil ist in Form eines Zentralventils ausgebildet und kann zu dessen Verwendung in eine Zentralbohrung des Abtriebsteils (Rotor) eines hydraulischen Nockenwellenverstellers eingesetzt werden. Die Platzierung eines solchen Zentralventils in einem Nockenwellenversteller, sowie dessen Anbindung an das Hydrauliksystem (Ölkreis) einer Brennkraftmaschine ist dem Fachmann an sich bekannt und beispielsweise in der eingangs genannten gattungsbildenden Offenlegungsschrift DE 102005052481 A1 ausführlich beschrieben, so dass sich hier eine weitere Beschreibung erübrigt. Hinsichtlich der Anordnung des erfindungsgemäßen Zentralventils in einem hydraulischen Rotationskolbenversteller und dessen Anbindung an den Druckmittelkreis wird auf die Offenbarung dieser Druckschrift in vollem Umfang Bezug genommen.

Das insgesamt mit der Bezugszahl 1 bezeichnete Steuerventil umfasst ein Ventilgehäuse 2, das entsprechend der Gestaltung des Steuerventils als Zentralventil in Form einer Zentralschraube ausgebildet ist.

Das Ventilgehäuse 2 umfasst demnach einen sich stufenförmig erweiternden Gehäuserumpf 3 und einen im Bereich des geringsten Rumpfdurchmessers an den Gehäuserumpf 3 angeformten Gehäuseschaft 4, der mit einem Außengewinde 5 versehen ist. Der Gehäuseschaft 4 kann in eine mit einem entsprechenden Innengewinde versehene Aufnahmebohrung einer Nockenwelle eingeschraubt werden, was in Fig. 1 nicht dargestellt ist. In dem Steuerventil 1 dient lediglich der in einer Zentralbohrung des Abtriebsteils des Nockenwellenverstellers aufzunehmende Gehäuserumpf 3 zur Steuerung von Druckmittelströmen.

Das Ventilgehäuse 2 ist im Bereich des Gehäuserumpfes 3 mit einem Gehäusehohlraum 6 versehen, der in Form einer sacklochartigen Aufnahme ausgebildet ist. Gehäuseschaftseitig sind in den Gehäusehohlraum 6 ein Ringfilter 10, ein Sitzflächeneinsatz 11 und eine als Schließelement eines insgesamt mit der Bezugszahl 13 bezeichneten Rückschlagventils dienende Dichtscheibe 12 eingesetzt, welche weiter unten noch näher erläutert wird.

In den Gehäusehohlraum 6 ist ein hohler Druckmittelleiteinsatz 7 eingesetzt, welcher in seinem Außendurchmesser dem Innendurchmesser des Gehäusehohlraums 6 angepasst ist. Der Druckmittelleiteinsatz 7 umfasst einen hülsenförmigen Einsatzabschnitt 14 mit einem gehäuseschaftseitig angeformten Strukturabschnitt 15, der stirnseitig mit einem axialen Stützring 16 versehen ist. Der Stützring 16 ist innerhalb eines axialen Haltekragens 17 aufgenommen, der an einem Sitzflächenkörper 19 des Sitzflächeneinsatzes 11 angeformt ist. Hierbei gelangt eine Stirnfläche des axialen Stützrings 16 zur Anlage gegen die Dichtscheibe 12, die ihrerseits einer vom Sitzflächenkörper 19 geformten Sitzfläche 20 anliegt. Der Haltekragen 17 ist an seinem vom Gehäuseschaft 4 abgewandten freien Ende radial einwärts gebogen und hintergreift den Stützring 16 an einer vom Strukturabschnitt 15 geformten Kehlung 18, wodurch die drei Komponenten Sitzflächeneinsatz 11, Dichtscheibe 12 und Druckmittelleiteinsatz 7 in ihrer relativen axialen Lage gesichert werden. Mittels eines Sicherungsrings 22 ist der Druckmittelleiteinsatz 7 innerhalb des Gehäusehohlraums 6 axial gesichert.

In den nicht näher bezeichneten Hohlraum des Druckmittelleiteinsatzes 7 ist eine hohlzylindrische Steuerhülse 8 eingesetzt, deren Außendurchmesser dem Innendurchmesser des Druckmittelleiteinsatzes 7 angepasst ist. Die Steuerhülse 8 ist hierzu mit ihrem gehäuseschaftseitigen Endabschnitt in einer vom Strukturabschnitt 15 des Druckmittelleiteinsatzes 7 geformten ringnutförmigen Hülsenaufnahme 21 aufgenommen und durch den Sicherungsring 22 gegen axiales Verschieben gesichert.

In den nicht näher bezeichneten Hohlraum der Steuerhülse 8 ist ein als Hohlkolben mit einem Kolbenhohlraum 33 ausgebildeter Steuerkolben 9 axial verschiebbar eingesetzt. In die Außenumfangsfläche des Steuerkolbens 9 ist eine ringförmige Steuernut 24 eingearbeitet, die von in Form eines ersten Ringbunds 25 und eines zweiten Ringbunds 26 geformten Steuerabschnitten, welche axial voneinander beabstandet sind, begrenzt wird. Der Außendurchmesser des ersten und zweiten Ringbunds 25, 26 ist dem Innendurchmesser der Steuerhülse 8 angepasst. An seinem gehäuseschaftseitigen Endabschnitt formt der zweite Ringbund 26 des Steuerkolbens 9 eine Ringstufe 27, der ein Ende eines Federelements 28 anliegt, das sich an seinem anderen Ende in einer vom Strukturabschnitt 15 des Druckmittelleiteinsatzes 7 geformten Federaufnahme 23 abstützt. Ein durch die Federkraft des Federelements 28 bewirktes Herausgleiten des Steuerkolbens 9 aus dem Hohlraum der Steuerhülse 8 wird durch den ersten Ringbund 25, der zur Anlage gegen den Sicherungsring 22 gelangt, verhindert.

Der Steuerkolben 9 kann entgegen der Federkraft des Federelements 28 innerhalb der Steuerhülse 8 axial verschoben werden, zu welchem Zweck an der vom Gehäuseschaft 4 abgewandten Stirnseite des Steuerkolbens 9 ein Aktuator, beispielsweise ein Elektromagnet mit Stößel, angreift, wie beispielsweise in der oben genannten gattungsbildenden Offenlegungsschrift beschrieben ist.

Das Ventilgehäuse 2 ist im Bereich des Gehäuserumpfes 3 mit drei axial beabstandeten Gehäuse-Radialöffnungen 29-31 versehen, nämlich auf der dem Gehäuseschaft 4 zugewandten Seite des Gehäuserumpfs 3 geformte erste Gehäuse-Radialöffnungen 29, auf der dem Gehäuseschaft 4 abgewandten Seite des Gehäuserumpfs 3 geformte dritte Gehäuse-Radialöffnungen 31, und zwischen diesen angeordnete zweite Gehäuse-Radialöffnungen 30, welche jeweils in den Gehäusehohlraum 6 münden. Der Druckmittelleiteinsatz 7 ist mit ersten Einsatz-Radialöffnungen 34 und zweiten Einsatz-Radialöffnungen 35 versehen, welche jeweils in den Hohlraum des Druckmittelleiteinsatzes münden. Ebenso ist die Steuerhülse 8 mit ersten Hülse-Radialöffnungen 36 und zweiten Hülse-Radialöffnungen 37 versehen, welche jeweils in den Hohlraum der Steuerhülse 8 münden. Hierbei sind die zweiten Gehäuse-Radialöffnungen 30, die ersten Einsatz-Radialöffnungen 34 und die ersten Hülse-Radialöffnungen 36 jeweils radial fluchtend bzw. ineinander mündend angeordnet. Gleichermaßen sind die dritten Gehäuse-Radialöffnungen 31, die zweiten Einsatz-Radialöffnungen 35 und die zweiten Hülse-Radialöffnungen 37 jeweils radial fluchtend bzw. ineinander mündend angeordnet. Der Gehäusehohlraum 6 des Ventilgehäuses 2 ist mit einer axialen Gehäusehohlraumöffnung 32 versehen, die mit einer axialen Kolbenhohlraumöffnung 38 des Kolbenhohlraums 33 des Steuerkolbens 9 verbunden ist.

In dem Steuerventil 1 dienen die ersten Gehäuse-Radialöffnungen 29 als Druckmittelzulauf bzw. Druckmittelanschluss (P) und sollen mit einer Druckmittelpumpe zum Zuführen von Druckmittel zum Steuerventil 1 verbunden werden. Die zweiten und dritten Gehäuse-Radialöffnungen 30, 31 dienen jeweils als Arbeitsanschluss (A, B) zur Verbindung mit den Druckkammern des Nockenwellenverstellers, wohingegen die axiale Gehäusehohlraumöffnung 32 als Ablaufanschluss (T) zur Verbindung mit einem Druckmitteltank dient.

Strömt Druckmittel durch die ersten Gehäuse-Radialöffnungen 29 in das Steuerventil 1 ein, so gelangt es in eine im Sitzflächeneinsatz 11 geformte Zentralöffnung 39, passiert das hydraulisch entsperrbare Rückschlagventil 13, gelangt in einen vom Strukturabschnitt 15 geformten Druckmittelraum 40 und wird über nicht näher dargestellte axiale Fluidkanäle, die von dem Druckmittelleiteinsatz 7 geformt bzw. umgriffen werden, zur Steuernut 24 des Steuerkolbens 9 geleitet. Dem Fachmann ist aus der oben genannten gattungsbildenden deutschen Offenlegungsschrift bekannt bzw. nahegelegt, wie der Druckmittelleiteinsatz 7 zur Formung entsprechender axialer Fluidkanäle zu gestalten ist, so dass hier nicht näher darauf eingegangen werden muss. Die von dem Druckmittelleiteinsatz 7 geformten axialen Fluidkanäle münden in dritte Hülse-Radialbohrungen 41 der Steuerhülse 8, die ihrerseits in die Steuernut 24 münden.

Über die Steuernut 24 können, gesteuert durch die in Form von Ringbünden 25, 26 ausgebildeten Steuerabschnitte des Steuerkolbens 9, je nach axialer Position des Steuerkolbens 9, die zweiten oder dritten GehäuseRadialöffnungen 30, 31 (Arbeitsanschlüsse) mit den ersten GehäuseRadialöffnungen 29 (Druckmittelanschluss) verbunden werden, während der jeweils andere Arbeitsanschluss mit der Gehäusehohlraumöffnung 32 (Ablaufanschluss) verbunden ist. Somit kann über die Steuernut 24 eine erste Druckmittelleitung (fluidleitende Verbindung) zwischen der ersten Gehäuse-Radialöffnung 29 (Zulaufanschluss) und der zweiten Gehäuse-Radialöffnung 30 (erster Arbeitsanschluss "A") eingerichtet werden, welche die Zentralöffnung 39, den Druckmittelraum 40, die nicht näher dargestellten axialen Fluidkanäle des Druckmittelleiteinsatzes 7, die dritte Hülse-Radialöffnung 41, die Steuernut 24, die erste Hülse-Radialöffnung 36 und die erste Einsatz-Radialöffnung 34 umfasst. Gleichermaßen kann über die Steuernut 24 eine weitere erste Druckmittelleitung (fluldleitende Verbindung) zwischen der ersten Gehäuse-Radialöffnung 29 (Zulaufanschluss) und der dritten Gehäuse-Radialöffnung 31 (zweiter Arbeitsanschluss "B") eingerichtet werden, welche die Zentralöffnung 39, den Druckmittelraum 40, die nicht näher dargestellten axialen Fluidkanäle des Druckmittelleiteinsatzes 7, die dritte Hülse-Radialöffnung 41, die Steuernut 24, die zweite Hülse-Radialöffnung 37 und die zweite Einsatz-Radialöffnung 35 umfasst. Gesteuert durch den Steuerkolben, kann ein Ablauf von Druckmittel vom ersten Arbeitsanschluss 30 zur Gehäusehohlraumöffnung 32 (Ablaufanschluss "T") über eine zweite Druckmittelleitung, die die erste Einsatz-Radialöffnung 34, die erste Hülse-Radialöffnung 36, den Kolbenhohlraum 33 und die Kolbenholraumöffnung 38 umfasst, erfolgen. Ebenso kann ein Ablauf von Druckmittel vom zweiten Arbeitsanschluss 31 zur Gehäusehohlraumöffnung 32 (Ablaufanschluss "T") über eine weitere zweite Druckmittelleitung, die die zweite Einsatz-Radialöffnung 35, die zweite Hülse-Radialöffnung 37, den Kolbenhohlraum 33 und die Kolbenholraumöffnung 38 umfasst, erfolgen.

Durch den Ringfilter 10 können mit dem Druckmittel geführte Schmutzpartikel gefiltert werden, um durch Verschmutzung bedingte funktionelle Beeinträchtigungen das Steuerventils 1 und insbesondere des Rückschlagventils 13 zu vermeiden.

Wie weiter oben bereits dargestellt wurde, umfasst das Rückschlagventil 13 eine Dichtscheibe 12, die einer vom Sitzflächenkörper 19 des Sitzflächeneinsatzes 11 geformten ringförmigen Sitzfläche 20 anliegt. Über die Stirnfläche des Stützrings 16 des Strukturabschnitts 15 wird die Dichtscheibe 12 ringförmig gegen die Sitzfläche 20 gedrückt, wobei der Haltekragen 17 eine axiale Lagesicherung bewirkt.

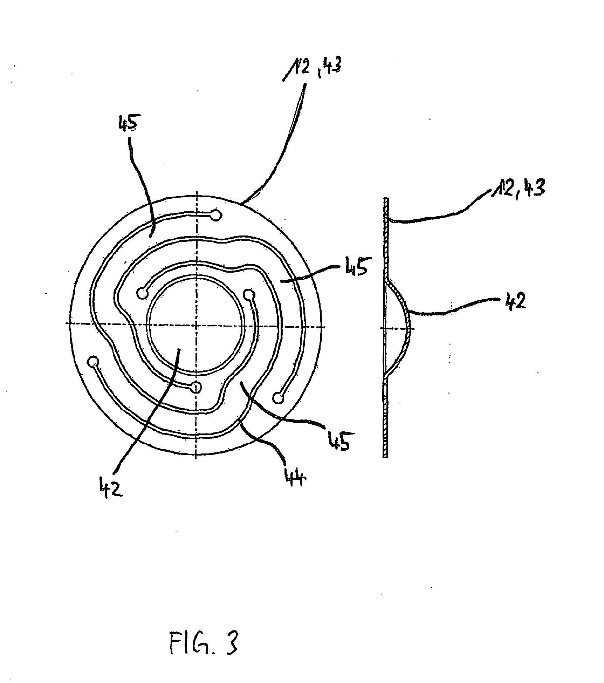

In Fig. 3 ist die Dichtscheibe 12 des Rückschlagventils 12 des Steuerventils 1 in einer perspektivischen Ansicht und einer Axialschnittansicht näher dargestellt. Demnach setzt sich die plättchenförmige Dichtscheibe 12 aus einem kalottenförmigen Scheibenmittelabschnitt 42 und einem ebenen Scheibenaußenabschnitt 43 zusammen. Im eingebauten Zustand befindet sich der kalottenförmige Scheibenmittelabschnitt 42 innerhalb der Zentralöffnung 39 des Sitzflächeneinsatzes 11, während nur der ebene Scheibenaußenabschnitt 43 der Sitzfläche 20 anliegt.

Die Dichtscheibe 12 ist im Bereich des Scheibenaußenabschnitts 43 mit einer Mehrzahl spaltförmiger Durchbrechungen 44 versehen, die den Scheibenmittelabschnitt 42 in krummliniger Führung jeweils spiralförmig umgeben. Hierdurch wird der Scheibenaußenabschnitt 43 in eine Mehrzahl miteinander verbundener Federzungen 45 unterteilt, die jeweils unter Weitung der spaltförmigen Durchbrechungen 44 in axialer Richtung elastisch federnd gebogen werden können. Die hierbei zu überwindende Federkraft hängt von Material und Stärke der Dichtscheibe 12, sowie von Anordnung und Abmessung der Durchbrechungen 44 ab.

Die Dichtscheibe ist zu diesem Zweck beispielsweise aus Federstahl mit einer Stärke von 0,1 bis 0,5 mm gefertigt. Die Spaltbreite der spaltförmigen Durchbrechungen beträgt vorzugsweise wenigstens 1 mm und liegt beispielsweise in einem Bereich von 1 bis 2 mm, um einen ausreichenden Durchfluss von Druckmittel zu ermöglichen.

Im eingebauten Zustand befinden sich die spaltförmigen Durchbrechungen 44 der Dichtscheibe 12 außerhalb des Bereichs der Zentralöffnung 39. Bei anströmendem Druckmittel wird bei einem ausreichenden hydraulischen Öffnungsdruck der als Verschlussteil zum Verschließen der Zentralöffnung 39 dienende Scheibenmittelabschnitt 42 gegenüber dem fixierten Rand des Scheibenaußenabschnitts 43 bewegt, wobei der nichtfixierte Bereich des Scheibenaußenabschnitts 43 von der Sitzfläche 20 abgehoben wird und Druckmittel durch die geweiteten Durchbrechungen 44 strömen kann und in den Druckmittelraum 40 gelangt. Der Scheibenmittelabschnitt 42 wird hierbei unter elastischer Verformung der Federzungen 45 gegenüber dem fixierten Randbereich des Scheibenaußenabschnitts 43 axial bewegt. Eine Überdehnung der Dichtscheibe 12 wird durch einen vom Strukturabschnitt 15 des Druckmittelleiteinsatzes 7 geformten Anschlag 46 verhindert.

Bei einem auftretenden Druckstoß in Gegenrichtung bzw. bei einem Rücklauf von Druckmittel legt sich die Dichtscheibe 12 mit ihrem Scheibenaußenabschnitt 43 der Sitzfläche 20 an und der Scheibenmittelabschnitt 42 verschließt die Zentralöffnung 39, so dass das Rückschlagventil 13 den Rücklauf von Druckmittel sperrt.

Aufgrund der im Vergleich zu einer Kugel als Schließelement wesentlich kleineren Massenträgheit der Dichtscheibe 12 kann ein besonders schnelles Sperrverhalten des Rückschlagventils 13 erzielt werden. Zudem verfügt die Dichtscheibe 12 im Vergleich zu einer Kugel über eine wesentlich größere effektive Anströmfläche, so dass der hydraulische Schließdruck der Dichtscheibe 12 im Vergleich zu einer Kugel höher ist, was das schnelle Schließverhalten unterstützt.

Die spezielle Gestaltung der Dichtscheibe 12 mit spiralförmigen Durchbrechungen 44 im Scheibenaußenabschnitt 43 bringt den wesentlichen Vorteil mit sich, dass die Federzungen 45 im Vergleich zum Durchmesser der Dichtscheibe 12 relativ lang gestaltet werden können, wodurch die Federkraft relativ gering ist und ein entsprechend niedriger Öffnungsdruck realisierbar ist.

Zudem hat sich in praktischen Versuchen zur Langzeitanwendung gezeigt, dass eine in der Praxis ausreichende Dauerbelastbarkeit der Dichtscheibe 12, bei einer Ausgestaltung der Dichtscheibe, bei der die Zentralöffnung 39 durch einen über eine Federzunge an den übrigen Teil der Dichtscheibe angebundenen Deckel verschlossen wird, nicht gegeben ist.

Über den kalottenförmigen Scheibenmittelabschnitt 42 der Dichtscheibe 12 kann ein vorteilhaftes Anströmverhalten von Druckmittel an die Dichtscheibe 12 erreicht werden, da hierdurch der Scheibenmittelabschnitt 42 gleichmäßig ausgelenkt wird und die hydraulische Kraft in dem zum Scheibenaußenabschnitt 43 angrenzenden Randbereich des Scheibenmittelabschnitts 42 angreift. Zudem kann bei Sperrung des Rückschlagventils 13 in vorteilhafter Weise eine Selbstzentrierung der Dichtscheibe 12 durch den in die Zentralöffnung 39 eindringenden kalottenförmigen Scheibenmittelabschnitt 42 erreicht werden.

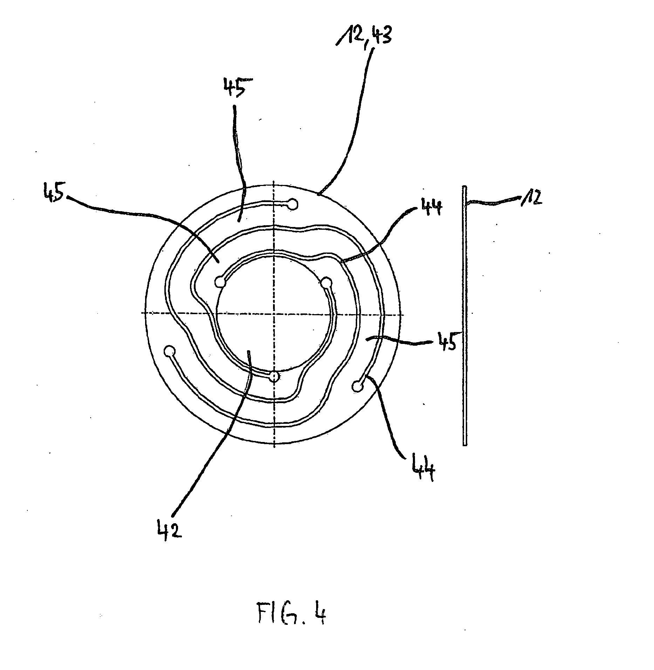

In Fig. 4 ist eine weitere Ausführungsform der Dichtscheibe 12 des Rückschlagventils 12 des Steuerventils 1 in einer perspektivischen Ansicht und einer Axialschnittansicht näher dargestellt. Diese Ausführungsform der Dichtscheibe 12 unterscheidet sich von der in Fig. 3 gezeigten Ausführungsform lediglich dadurch, dass der Scheibenmittelabschnitt 43 nicht kalottenförmig, sondern eben geformt ist, so dass der Scheibenmittelabschnitt 43 und der Scheibenaußenabschnitt 44 gemeinsam ein ebenes Plättchen formen. Auf die Vorteile des kalottenförmigen Scheibenmittelabschnitts 43 wird bei dieser Ausführungsform verzichtet, jedoch ermöglicht sie eine einfachere Fertigung der Dichtscheibe 12.

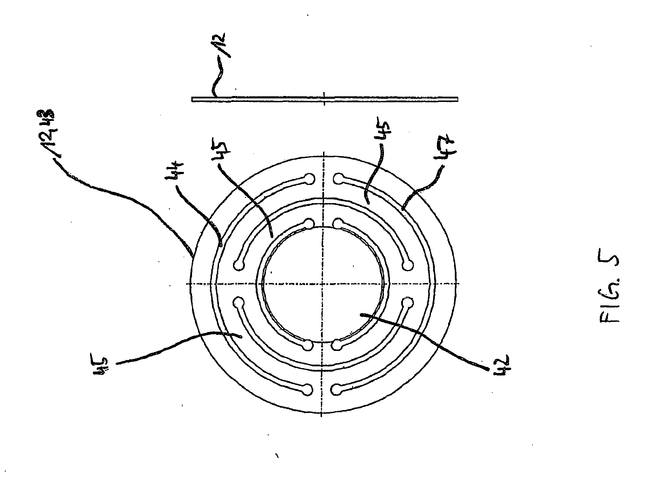

In Fig. 5 ist eine weitere Ausführungsform der Dichtscheibe 12 des Rückschlagventils 12 des Steuerventils 1 in einer perspektivischen Ansicht und eider Axialschnittansicht näher dargestellt. Diese Ausführungsform der Dichtscheibe 12 unterscheidet sich von der in Fig. 4 gezeigten Ausführungsform lediglich dadurch, dass die spaltförmigen Durchbrechungen 47 des Scheibenaußenabschnitts 43 den Scheibenmittelabschnitt 42 nicht spiralförmig sondern in Form von konzentrisch angeordneten Ringstücken umgeben, was eine besonders einfache Fertigung der Dichtscheibe 12 ermöglicht.

Das erfindungsgemäße Rückschlagventil 13 ermöglicht somit im Vergleich zu den herkömmlich eingesetzten Kugel-Rückschlagventilen aufgrund der geringeren Massenträgheit und der größeren Anströmfläche ein wesentlicher schnelleres Schließverhalten des Rückschlagventils. Da es eine zusätzliche Feder zur Beaufschlagung des Schließkörpers verzichtbar macht, können Material- und Fertigungskosten eingespart werden. Die Dichtscheibe 12 kann aus einem preiswerten Material (beispielsweise Federstahl) in einfacher Weise durch Stanzung der Durchbrechungen 44, 47 hergestellt werden. Eine Montage in der industriellen Serienfertigung ist insbesondere im Vergleich zu den Kugel-Rückschlagventilen in besonders einfacher Weise möglich. Aufgrund der speziellen Gestaltung der Dichtscheibe 12 mit relativ langen, gegen eine vergleichsweise geringe Federkraft auslenkbaren Federzungen ist eine sichere Langzeitanwendung des Rückschlagventils gewährleistet.

### Bezugszeichenliste

- 1: Steuerventil
- 2: Ventilgehäuse
- 3: Gehäuserumpf
- 4: Gehäuseschaft
- 5: Außengewinde
- 6: Gehäusehohlraum
- 7: Druckmittelleiteinsatz
- 8: Steuerhülse
- 9: Steuerkolben
- 10: Ringfilter
- 11: Sitzflächeneinsatz
- 12: Dichtscheibe
- 13: Rückschlagventil
- 14: hülsenförmiger Einsatzabschnitt
- 15: Strukturabschnitt
- 16: Stützring
- 17: Haltekragen
- 18: Kehlung
- 19: Sitzflächenkörper
- 20: Sitzfläche
- 21: Hülsenaufnahme
- 22: Sicherungsring
- 23: Federaufnahme
- 24: Steuernut
- 25: erster Ringbund
- 26: zweiter Ringbund
- 27: Ringstufe
- 28: Federelement
- 29: erste Gehäuse-Radialöffnung
- 30: zweite Gehäuse-Radialöffnung
- 31: dritte Gehäuse-Radialöffnung
- 32: Gehäusehohlraumöffnung
- 33: Kolbenhohlraum
- 34: erste Einsatz-Radialöffnung
- 35: zweite Einsatz-Radialöffnung
- 36: erste Hülse-Radialöffnung
- 37: zweite Hülse-Radialöffnung
- 38: Kolbenhohlraumöffnung
- 39: Zentralöffnung
- 40: Druckmittelraum
- 41: dritte Hülse-Radialöffnung
- 42: Scheibenmittelabschnitt
- 43: Scheibenaußenabschnitt
- 44: spiralförmige Durchbrechung
- 45: Federzunge
- 46: Anschlag
- 47: ringförmige Durchbrechung

## Patentansprüche

1. Nockenwellenversteller mit einem Steuerventil (1) zur Steuerung von Druckmittelströmen, welches umfasst:
- ein hohl ausgeführtes Ventilgehäuse (2) mit wenigstens einem Zulaufanschluss (29), wenigstens zwei Arbeitsanschlüssen (30, 31) und wenigstens einem Ablaufanschluss (32),
- einen innerhalb des Ventilgehäuses (2) axial verschiebbar geführten Steuerkolben (9), durch welchen positionsabhängig der Zulaufanschluss (29) über wenigstens eine erste Druckmittelleitung (29, 40, 41, 24, 34, 36; 29, 40, 41, 24, 34, 37, 35) mit einem der Arbeitsanschlüsse (30, 31) verbindbar ist, während der jeweils andere Arbeitsanschluss über wenigstens eine zweite Druckmittelleitung (34, 36, 33, 38; 33, 37, 33, 38) mit dem Ablaufanschluss (32) verbunden ist,
- wenigstens ein die erste Druckmittelleitung in Zulaufrichtung freigebendes, hydraulisch entsperrbares Rückschlagventil (13) mit einem Schließelement (12), durch das eine Ventilöffnung (39) verschließbar ist, **dadurch gekennzeichnet, dass** das Schließelement (12) mit wenigstens einer konzentrisch umgebenen, ringförmigen Durchbrechung (44) versehen ist, derart, dass ein über wenigstens eine Federzunge (45) federnd gelagertes Verschlussteil (42) zum Verschließen der Ventilöffnung (39) geformt ist.

2. Nockenwellenversteller mit einem Steuerventil (1) nach Anspruch 1, **dadurch gekennzeichnet, dass** das Schließelement (12) aus dem Verschlussteil (42) und einem das Verschlussteil wenigstens teilweise umgebenden Außenteil (43) geformt ist, wobei das Außenteil (43) zur Formung von Federzungen (45) mit einer Mehrzahl das Verschlussteil spiralförmig umgebenden Durchbrechungen (44) versehen ist.

3. Nockenwellenversteller mit einem Steuerventil (1) nach einem der Ansprüche 1 bis 2, **dadurch gekennzeichnet, dass** das Schließelement (12) scheibenförmig ausgebildet ist.

4. Nockenwellenversteller mit einem Steuerventil (1) nach einem der Ansprüche 1 bis 3, **dadurch gekennzeichnet, dass** die wenigstens eine Durchbrechung (44, 47) spaltenförmig ausgebildet ist und eine minimale Spaltbreite von wenigstens 1 mm aufweist.

5. Nockenwellenversteller mit einem Steuerventils (1) nach Anspruch 4, **dadurch gekennzeichnet, dass** die wenigstens eine Durchbrechung (44, 47) eine minimale Spaltbreite im Bereich von 1 bis 2 mm hat.

6. Nockenwellenversteller mit einem Steuerventil (1) nach einem der Ansprüche 1 bis 5, **dadurch gekennzeichnet, dass** das Schließelement (12) aus Federstahl besteht.

7. Nockenwellenversteller mit einem Steuerventil (1) nach Anspruch 6, **dadurch gekennzeichnet, dass** der Federstahl eine Stärke im Bereich 0,1 bis 0,5 mm hat.

8. Nockenwellenversteller mit einem Steuerventil (1) nach einem der Ansprüche 1 bis 7, **dadurch gekennzeichnet, dass** innerhalb des Ventilgehäuses (2) ein hohl ausgeführter Druckmittelleiteinsatz (7) mit einem Druckmittelkanal zur fluidleitenden Verbindung des Zulaufanschlusses (29) mit einer Steuernut (24) des Steuerkolbens (9) angeordnet ist, in dessen Hohlraum der Steuerkolben axial verschiebbar aufgenommen ist, wobei der Druckmittelleiteinsatz mit einem Strukturabschnitt (15) zur Fixierung des Schließelements (12) an einer Sitzfläche (20) versehen ist.

9. Nockenwellenversteller mit einem Steuerventil (1) nach Anspruch 8, **dadurch gekennzeichnet, dass** die Sitzfläche (20) von einem in den Gehäusehohlraum (6) eingesetzten Sitzflächeneinsatz (11) geformt wird.

10. Nockenwellenversteller mit einem Steuerventil (1) nach Anspruch 9, **dadurch gekennzeichnet, dass** der Sitzflächeneinsatz (11) mit einem Halteelement (17) zur relativen axialen Fixierung des Druckmittelleiteinsatzes (7) versehen ist.

11. Nockenwellenversteller mit einem Steuerventil (1) nach einem der Ansprüche 8 bis 10, **dadurch gekennzeichnet, dass** der Druckmittelleiteinsatz (7) einen Anschlag (46) für das in Öffnungsstellung befindliche Schließelement formt.

## Claims

1. Camshaft adjuster comprising a control valve (1) for controlling hydraulic fluid flows, which comprises:
- a hollow valve housing (2) having at least one inlet connection (29), at least two working connections (30, 31) and at least one outlet connection (32),
- a control piston (9), which is guided so that it is axially displaceable inside the valve housing (2) and which serves to connect the inlet connection (29) to one of the working connections (30, 31) via at least a first hydraulic fluid line (29, 40, 41, 24, 34, 36; 29, 40, 41, 24, 34, 37, 35) as a function of the position, whilst the other working connection is connected to the outlet connection (32) via at least a second hydraulic fluid line (34, 36, 33, 38; 33, 37, 33, 38),
- at least one hydraulically openable check valve (13) opening the first hydraulic fluid line in the inlet direction and having a closing element (12), which serves for closing a valve aperture (39),
**characterized in that** the closing element (12) is provided with at least one concentrically surrounding, annular perforation (44), such that a sealing part (42), resiliently supported by at least one flexible tongue (45), is formed for sealing of the valve aperture (39).

2. Camshaft adjuster comprising a control valve (1) according to Claim 1, **characterized in that** the closing element (12) is formed from the sealing part (42) and an outer part (43) at least partially surrounding the sealing part, the outer part (43) being provided with a plurality of perforations (44) surrounding the sealing part in a spiral shape in order to form flexible tongues (45).

3. Camshaft adjuster comprising a control valve (1) according to either of Claims 1 and 2, **characterized in that** the closing element (12) is of disk-shaped design.

4. Camshaft adjuster comprising a control valve (1) according to one of Claims 1 to 3, **characterized in that** the at least one perforation (44, 47) is of slitshaped design and has a minimum slit width of at least 1 mm.

5. Camshaft adjuster comprising a control valve (1) according to Claim 4, **characterized in that** the at least one perforation (44, 47) has a minimum slit width in the order of 1 to 2 mm.

6. Camshaft adjuster comprising a control valve (1) according to one of Claims 1 to 5, **characterized in that** the closing element (12) is composed of spring steel.

7. Camshaft adjuster comprising a control valve (1) according to Claim 6, **characterized in that** the spring steel has a thickness in the order of 0.1 to 0.5 mm.

8. Camshaft adjuster comprising a control valve (1) according to one of Claims 1 to 7, **characterized in that** a hollow hydraulic fluid baffle insert (7) having a hydraulic fluid duct for the fluid-conducting connection of the inlet connection (29) to a control groove (24) of the control piston (9) and accommodating the control piston so that it is axially displaceable in the hollow cavity thereof, is arranged inside the valve housing (2), the hydraulic fluid baffle insert being provided with a structured portion (15) for fixing the closing element (12) to a seating face (20).

9. Camshaft adjuster comprising a control valve (1) according to Claim 8, **characterized in that** the seating face (20) is formed by a seating face insert (11) inserted into the housing cavity (6).

10. Camshaft adjuster comprising a control valve (1) according to Claim 9, **characterized in that** the seating face insert (11) is provided with a retaining element (17) for the relative axial fixing of the hydraulic fluid baffle insert (7).

11. Camshaft adjuster comprising a control valve (1) according to one of Claims 8 to 10, **characterized in that** the hydraulic fluid baffle insert (7) forms a stop (46) for the closing element situated in the open position.

## Revendications

1. Déphaseur d'arbre à came comprenant une soupape de commande (1) pour la commande de flux de milieu sous pression, comprenant :
- un boîtier de soupape (2) de configuration creuse, comprenant au moins un raccord d'amenée (29), au moins deux raccords de travail (30, 31) et au moins un raccord de sortie (32),
- un piston de commande (9) guidé de manière déplaçable axialement à l'intérieur du boîtier de soupape (2), par le biais duquel, en fonction de sa position, le raccord d'amenée (29) peut être connecté à l'un des raccords de travail (30, 31) par le biais d'au moins une première conduite de milieu sous pression (29, 40, 41, 24, 34, 36 ; 29, 40, 41, 24, 34, 37, 35), tandis que l'autre raccord de travail respectif est connecté par le biais d'au moins une deuxième conduite de milieu sous pression (34, 36, 33, 38 ; 33, 37, 33, 38) au raccord de sortie (32),
- au moins une soupape de retenue (13) libérant la première conduite de milieu sous pression dans la direction d'amenée, pouvant être déverrouillée hydrauliquement, comprenant un élément de fermeture (12) par le biais duquel une ouverture de soupape (39) peut être fermée,
**caractérisé en ce que** l'élément de fermeture (12) est muni d'au moins un orifice (44) de forme annulaire, s'étendant de manière concentrique sur la périphérie, de telle sorte qu'une partie de fermeture (42) supportée à ressort par le biais d'au moins une langue à ressort (45) soit formée pour fermer l'ouverture de soupape (39).

2. Déphaseur d'arbre à came comprenant une soupape de commande (1) selon la revendication 1, **caractérisé en ce que** l'élément de fermeture (12) est formé de la partie de fermeture (42) et d'une partie extérieure (43) entourant au moins en partie la partie de fermeture, la partie extérieure (43) étant munie d'une pluralité d'orifices (44) entourant en spirale la partie de fermeture en vue de former des langues à ressort (45).

3. Déphaseur d'arbre à came comprenant une soupape de commande (1) selon l'une quelconque des revendications 1 ou 2, **caractérisé en ce que** l'élément de fermeture (12) est réalisé sous forme de disque.

4. Déphaseur d'arbre à came comprenant une soupape de commande (1) selon l'une quelconque des revendications 1 à 3, **caractérisé en ce que** l'au moins un orifice (44, 47) est réalisé sous forme de fente et présente une largeur de fente minimale d'au moins 1 mm.

5. Déphaseur d'arbre à came comprenant une soupape de commande (1) selon la revendication 4, **caractérisé en ce que** l'au moins un orifice (44, 47) présente une largeur de fente minimale de l'ordre de 1 à 2 mm.

6. Déphaseur d'arbre à came comprenant une soupape de commande (1) selon l'une quelconque des revendications 1 à 5, **caractérisé en ce que** l'élément de fermeture (12) se compose d'acier à ressort.

7. Déphaseur d'arbre à came comprenant une soupape de commande (1) selon la revendication 6, **caractérisé en ce que** l'acier à ressort a une épaisseur de l'ordre de 0,1 à 0,5 mm.

8. Déphaseur d'arbre à came comprenant une soupape de commande (1) selon l'une quelconque des revendications 1 à 7, **caractérisé en ce qu'**à l'intérieur du boîtier de soupape (2) est disposé un insert de conduite de milieu sous pression (7) réalisé sous forme creuse, comprenant un canal de milieu sous pression pour la connexion fluidique du raccord d'amenée (29) à une rainure de commande (24) du piston de commande (9), dans la cavité duquel le piston de commande est reçu de manière déplaçable axialement, l'insert de conduite de milieu sous pression étant muni d'une portion structurelle (15) pour la fixation de l'élément de fermeture (12) à une surface de siège (20).

9. Déphaseur d'arbre à came comprenant une soupape de commande (1) selon la revendication 8, **caractérisé en ce que** la surface de siège (20) est formée par un insert de surface de siège (11) inséré dans la cavité du boîtier (6).

10. Déphaseur d'arbre à came comprenant une soupape de commande (1) selon la revendication 9, **caractérisé en ce que** l'insert de surface de siège (11) est pourvu d'un élément de retenue (17) pour la fixation axiale relative de l'insert de conduite de milieu sous pression (7).

11. Déphaseur d'arbre à came comprenant une soupape de commande (1) selon l'une quelconque des revendications 8 à 10, **caractérisé en ce que** l'insert de conduite de milieu sous pression (7) forme une butée (46) pour l'élément de fermeture se trouvant dans la position d'ouverture.
